# EUROPÄISCHE PATENTANMELDUNG

(11) **EP 2 995 407 A1**
(43) Veröffentlichungstag der Anmeldung: **16.03.2016**
(21) Anmeldenummer: 14003157.6
(22) Anmeldetag: 12.09.2014
(51) Int. Cl.: B23D 47/04

(54) **Verfahren und Vorrichtung zum Trennen von Halbzeugen**

(71) Anmelder: TK Maschinenbau GmbH, 4621 Sipbachzell (AT)
(72) Erfinder: Theischinger, Bernhard, 4623 Gunskirchen (AT); Küpper, Wilfried, 53894 Mechernich (DE)

(57) **Zusammenfassung**

Das erfindungsgemäße Verfahren und eine dazu geeignete Vorrichtung ermöglicht das Ablängen von Halbzeugen in hoher Taktrate.

Dazu werden die erforderlichen Schritte, Übernahme der HalbzeugstangePositionieren des Halbzeugs - Spannen - Trennen und Ausfördern des abgelängten Produktes gleichzeitig ausgeführt. Die einzelnen Schritte können auf einem Rundtaktmagazin, welches konstant oder gepulst rotiert ausgeführt werden.

Wesentlich ist hierbei, dass nicht die Trennvorrichtung durchs Halbzeug, sondern das Halbzeug durch die im Wesentlichen ortsfeste Säge geführt wird.

## Beschreibung

Die Erfindung betrifft ein Verfahren sowie eine Vorrichtung zum Ablängen von Halbzeugen, insbesondere Rohren, Vollstäben oder Profilen mittels einer im Wesentlichen ortsfesten Trenneinheit, an der die zu trennenden Halbzeuge durchgeführt werden. Es soll ein gegenüber dem Stand der Technik schnelleres, damit produktiveres Verfahren, sowie eine neue Vorrichtung dafür entwickelt werden.
Ein derartiges Verfahren ist im Anspruch 1 und den abhängigen Ansprüchen 2 bis 7, die Vorrichtung im Anspruch 8 und den weiteren abhängigen Ansprüchen 9 bis 15 beschrieben.

Halbzeuge, wie Rohre, Vollstäbe oder Voll- und Hohlkammerprofile mit Durchmessern von 5 bis 200mm werden meist mit kontinuierlichen Fertigungsmethoden quasi endlos hergestellt und vom Produzenten auf bestimmte Längen getrennt, um transportiert werden zu können Die Länge der Halbzeuge beträgt dabei bevorzugt zwischen 3 bis 24m. Die Halbzeuge werden dabei häufig zu Bündeln zusarrimengefasst und zum Lohnfertiger oder Verarbeiter transportiert. Wenn derartige Halbzeuge für Produkte weiter bearbeitet werden, werden diese Halbzeugstangen auf die gewünschte Länge abgelängt. Diesen Trennvorgang führt typischerweise der Verarbeiter der Produkte oder ein Lohnverarbeiter, oder auch der Produzent der Halbzeuge durch. Für diesen Prozess des Trennens der Halbzeugstangen ist das neue Verfahren und die dazugehörige Vorrichtung gedacht.

Der Trennprozess geschieht heute typischerweise mit Sägeanlagen, an denen die Halbzeuge positioniert, anschließend gespannt und durch eine Schwenk- oder Linearbewegung der rotierenden Sägeeinheit getrennt und die getrennten Produkte wieder entnommen werden. Die Sägeeinheit muss nach dem Abtrennen wieder in die Ausgangslage zurück bewegt werden. Die einzelnen Schritte laufen dabei seriell, also hintereinander ab, was zu relativ langen Zykluszeiten führt. Speziell im angegebenen Durchmesserbereich von 5 bis 200mm sind sehr häufig hohe Stückzahlen erforderlich, was schnelle Zykluszeiten für hohe Durchsätze wünschenswert macht. Durch den seriellen Ablauf bei bekannten Verfahren, das heißt, dass die Positionierung, das Spannen und das Trennen nacheinander ablaufen sind weitere Optimierungen der Zykluszeit in der Produktion nur mehr schwierig und mit großem Aufwand möglich, bzw. nicht weiter möglich.

Neben der relativ langen Zykluszeit sind auch die Spannvorrichtungen an bestehenden Anlagen verbesserbar. Die bestehenden Spanneinrichtungen sind Produkt- und größenabhängig. Es werden oftmals verschiedene Halbzeuge getrennt und somit sind oft Umrüstarbeiten notwendig, was sich ebenso wieder negativ auf die Produktivität auswirkt.

Somit ist es Ziel der Erfindung ein Verfahren zu entwickeln, mit dem die Zykluszeit beim Trennen reduziert werden kann und eine Vorrichtung mit der dieses Verfahren ausgeführt wird und welche gleichzeitig für mehrere, unterschiedliche Produkte geeignet ist.

Das erfindungsgemäße Verfahren sowie die erfindungsgemäße Vorrichtung wird nachfolgend beispielhaft beschrieben und ist durch Anspruch 1 und den folgenden Ansprüchen 2 bis 7 sowie durch Anspruch 8 und die folgenden Ansprüche 9 bis 15 charakterisiert.

Bei dem erfindungsgemäßen Verfahren werden die zum Trennen von Halbzeugen erforderlichen Schritte parallel durchgeführt und die Halbzeuge an der Trenneinheit, welche im Wesentlichen ortsfest ist getrennt.
Die Trennvorrichtung dient dazu Halbzeuge, welche als Stangenmaterial typischerweise zu 3 bis 24m Länge vorliegen, genau auf die benötigte Länge zu konfektionieren. Diese Länge liegt typischerweise von wenigen cm bis zu 1 bis 2 m und ist ebenso wie die Länge der Ausgangshalbzeuge nicht für die Erfindung relevant, bzw. ist die Erfindung nicht durch die angegebenen Werte begrenzt. Als Halbzeuge können Rohre, Vollstäbe ebenso wie Voll- und Hohlkammerprofile mit dem Verfahren und der Vorrichtung getrennt werden. Der Durchmesser, bzw. Größenbereich liegt hier bei 5 bis 200mm, besonders bevorzugt bei 5 bis 80mm. Es können auch größere Produkte getrennt werden, jedoch ist bei größeren Produkten einerseits die Stückzahl nicht mehr so hoch, andererseits sind wesentlich weniger Produktwechsel notwendig, sodass der Vorteil des Verfahrens weniger zum Tragen kommt.

Die Halbzeuge können aus allen Materialien bestehen, insbesondere aus Metall, wie Stahl, Messing, Kupfer oder Aluminium, aber auch aus Kunststoff oder aus Holz.
Neben unterschiedlichen Materialien können auch unterschiedliche Trenneinrichtungen verwendet werden. Die Trenneinrichtung kann bevorzugt ein rotierendes Sägeblatt sein, welches von der Zahngeometrie auf die zu trennenden Halbzeuge abgestimmt ist. Es können aber andere Trennvorrichtungen, wie beispielsweise eine Kettensäge, eine Bandsäge, oder auch eine Abschervorrichtung wie ein Messer oder eine Guillotine sein. Charakteristisch für die Erfindung ist, dass eine Säge zwar rotiert, die Trennvorrichtung aber im Wesentlichen ortsfest bleibt und das Halbzeug an der Trennvorrichtung durchgeführt wird. Im Wesentlichen ortsfest bedeutet, dass kleine Positionsänderungen für die Schneidwinkeländerung sehr wohl möglich sind, aber die Hauptbewegung durch das Halbzeug und nicht wie im Stand der Technik bekannt durch die Trennvorrichtung ausgeführt wird.

Ein beispielhafter Ablauf bei dem erfindungsgemäßen Verfahren sieht wie folgt aus:
Aus den Transportbehältnissen, bzw. Bündel oder anderen Verpackungen werden die Halbzeugstangen vereinzelt und manuell oder automatisiert der Anlage einzeln übergeben. Derartige Vereinzelungsvorrichtungen sind im Stand der Technik hinlänglich bekannt und werden auch bei den bekannten und bereits beschriebenen Trennanlagen im Stand der Technik eingesetzt. Die einzelne Halbzeugstange wird in einer ersten Arbeitsstation in die Vorrichtung übergeben. Diese Übergabe erfolgt ohne die Vorrichtung zu stoppen, indem die Halbzeugstange während der laufenden Bewegung der Vorrichtung übergeben wird. Ist in der Vorrichtung noch ein Halbzeug, welches ein weiteres Mal abgelängt werden muss, entfällt der Arbeitsgang der Aufnahme einer neuen Halbzeugstange.
Ob eine neue Halbzeugstange übergeben werden muss, oder die bereits ein oder mehrmals abgelängte Stange ein weiters Mal abgelängt werden muss, wird über geeignete Messsensoren, welche aus dem Stand der Technik bekannt sind, ermittelt und der Steuerung als Information zur Verfügung gestellt.

Im nächsten Arbeitsschritt muss das Halbzeug mittels eines geeigneten Greifers auf die genaue Ablängposition positioniert werden. Der dazu notwendige Verfahrweg wird ebenso wieder über Messsensoren erfasst. Die Greifzange muss dabei einen vorgegebenen Verschubweg längs der Halbzeugstange ausführen. Neben diesem vorgegebenen Weg muss eine freie oder gesteuerte Bewegung mit der Bewegung der Halbzeugstange quer zur Vorschubrichtung in der Vorrichtung erfolgen. Die Greifvorrichtung wird also aktiv oder passiv mit dem Halbzeug in dessen Querachse mitgeführt. Somit kann diese Bewegung gesteuert erfolgen oder durch eine entsprechende Lagerung nur ermöglicht werden.

Der dritte notwendige Arbeitsschritt ist das Spannen des positionierten Halbzeugs zum Trennen. Dabei muss das Halbzeug zumindest zweimal, einmal auf jeder Seite der Trennvorrichtung gespannt und in der Position fixiert werden. Insbesondere bei langen Halbzeugen ist auch ein mehrmaliges Spannen notwendig und jedenfalls möglich.
Das Spannen kann mittels im Stand der Technik bekannter Klemmeinrichtungen erfolgen, die pneumatisch, hydraulisch oder elektromotorisch angetrieben werden. In einer Ausführungsvariante der Vorrichtung, kann diese Spanneinrichtung auch mittels einer federbelasteten und das Halbzeug auf eine schräge Ebene drückende Haltevorrichtung sein. Diese Haltevorrichtung kann neben bekannten Möglichkeiten auch rein mechanisch über Nocken an der Vorrichtung geöffnet werden, sodass keine elektrische, pneumatische oder hydraulische Ansteuerung der Spannvorrichtung erfolgen muss. Die Spannvorrichtung wirkt immer durch die Zugfeder und in Positionen, wo das Halbzeug nicht oder nur teilweise gespannt sein soll, greifen Nocken auf die Spanneinrichtung ein und lockern somit die Spannposition. Durch die Schrägführung an der das Halbzeug geklemmt wird und die Zugfedern können unterschiedliche Durchmesser, bzw. Produktgrößen mit der Vorrichtung getrennt werden, ohne dass Teile umgerüstet werden müssen.

Die vierte Arbeitsposition der Vorrichtung ist die Trenneinheit. Dabei wird das Halbzeug an einer im Wesentlichen ortsfesten Trenneinheit durchgeführt und dabei getrennt. Zusätzlich kann zur Trennung ein Rückhub mit den Spannelementen durchgeführt werden. Dies bedeutet, dass die Spannelemente vom Sägeblatt leicht weggezogen werden und somit den Schnitt freistellen. Dies kann insbesondere bei Materialien mit hoher Wärmeausdehnung und auch bei temperaturempfindlichen Materialien von Vorteil sein, ist jedenfalls immer möglich.

Eine fünfte Arbeitsposition fördert das auf die richtige Länge konfektionierte Produkt aus, oder übergibt dieses in ein Transportbehältnis oder an eine nächste Bearbeitungsvorrichtung. Das andere Teil der ursprünglichen Halbzeugstange wird entweder für einen weiteren Trennvorgang in der Vorrichtung belassen und in der zweiten Arbeitsposition erneut positioniert, oder aber wenn dieses bereits zu kurz ist ebenso ausgefördert. Dann wird in der Station 1 eine neue Halbzeugstange aufgenommen.

Kennzeichnend für das Verfahren ist, dass alle 5 notwendigen Schritte parallel stattfinden und somit kurze Taktzeiten möglich sind. Die Parallelschritte erfolgen beispielsweise durch ein Rundtaktmagazin, welches zumindest diese 5 Arbeitspositionen umfasst. Dabei können die einzelnen Arbeitspositionen gleich am Umfang verteilt oder auch mit beliebigen Teilungen auf einem Magazin erfolgen.
Ein Rundtaktmagazin führt während aller Arbeitsschritte eine Rotation aus. Diese Drehung kann konstant erfolgen, kann aber auch gepulst erfolgen, d.h. dass während dem unmittelbaren Trennvorgang die Geschwindigkeit geringer ist, als während der Zeiten, wo kein unmittelbarer Kontakt mit der Trennvorrichtung besteht.
Durch eine derart gepulste Bewegung kann nochmals Zykluszeit minimiert werden. Dadurch dass die Rotation immer stattfindet sind die notwendigen Beschleunigungs- und Verzögerungskräfte relativ gering und somit auch anlagenschonend.
Es kann jedoch auch der Vorgang des Trennens gepulst erfolgen, sodass das Halbzeug am Beginn des Trennvorgangs langsam, dann schneller und kurz vor Ende des Trennvorgangs wieder langsam, oder auch in umgekehrter Reihenfolge erfolgt, um ein optimales Trennergebnis zu erzielen.

Neben einem Rundtaktmagazin kann auch jede andere beliebige, in sich geschlossene Bewegung zwischen bzw. bei den einzelnen Stationen erfolgen. Dabei ist auch denkbar, dass die Bewegungen im Wesentlichen in einer Ebene stattfinden und über kleinere Umlenkungen die Halbzeuge insgesamt wieder zurück geführt werden. Auch hier sind bei, bzw. zwischen den Stationen unterschiedliche Geschwindigkeiten möglich.
Die gepulste Geschwindigkeit kann durch die Steuerung des Antriebs erfolgen, aber auch durch gezielte mechanische Umlenkungen, bzw. Auskopplung in langsamere Bewegungen erfolgen. Dies ist ein ähnliches Prinzip, wie es bei Seilbahnen zum Ein- und Aussteigen benutzt wird.

Somit ist es mit der vorliegenden Erfindung möglich eine kurze Taktzeit beim Ablängen von Halbzeugen zu erreichen und gleichzeitig auch für verschiedene Durchmesser keine Umrüstarbeiten an der Vorrichtung vornehmen zu müssen, was Ziel der Erfindung war.
Das erfindungsgemäße Verfahren sowie die erfindungsgemäße Vorrichtung wird in den unabhängigen Ansprüchen 1 und 8, sowie den abhängigen Ansprüchen 2 bis 7 und 9 bis 15 beschrieben.

## Patentansprüche

1. Verfahren zum Trennen von Halbzeugen auf eine gewünschte Länge, **dadurch gekennzeichnet, dass** die notwendigen Schritte zum Trennen des Halbzeugs (Einlegen - Positionieren - Spannen - Trennen - Ausfördern) parallel durchgeführt werden.

2. Verfahren nach Anspruch 1, **dadurch gekennzeichnet, dass** das Halbzeug an der im Wesentlichen ortsfesten Trennvorrichtung durchgeführt wird.

3. Verfahren nach mindestens einem der Ansprüche 1 und 2, **dadurch gekennzeichnet, dass** dieses an einer Anlage mit zumindest 5 Arbeitsstationen ausgeführt wird.

4. Verfahren nach mindestens einem der Ansprüche 1 bis 3, **dadurch gekennzeichnet, dass** dieses mit einem Rundtaktmagazin gepulst ausgeführt wird.

5. Verfahren nach mindestens einem der Ansprüche 1 bis 4, **dadurch gekennzeichnet, dass** die Übergabe der Halbzeuge im laufenden Betrieb erfolgt.

6. Verfahren nach mindestens einem der Ansprüche 1 bis 5, **dadurch gekennzeichnet, dass** die Positionierung durch einen aktiv oder passiv quer zur Halbzeuglängsachse mitführenden Greifer erfolgt.

7. Verfahren nach mindestens einem der Ansprüche 1 bis 6, **dadurch gekennzeichnet, dass** das Spannen der Halbzeuge mittels federbelasteter Klemmvorrichtung gegen eine schräge Ebene erfolgt.

8. Vorrichtung zum Trennen von Halbzeugen auf eine gewünschte Länge **dadurch gekennzeichnet, dass** diese als Rundtaktmagazin ausgeführt ist.

9. Vorrichtung nach Anspruch 8, **dadurch gekennzeichnet, dass** diese eine im Wesentlichen ortsfeste Trennvorrichtung besitzt.

10. Vorrichtung nach mindestens einem der Ansprüche 8 und 9, **dadurch gekennzeichnet, dass** die Trennvorrichtung ein rotierendes Sägeblatt aufweist.

11. Vorrichtung nach mindestens einem der Ansprüche 8 bis 10, **dadurch gekennzeichnet, dass** diese zum Spannen der Halbzeuge federbelastete Spannelemente besitzt, die das Halbzeug gegen eine schräge Ebene spannen.

12. Vorrichtung nach mindestens einem der Ansprüche 8 bis 11, **dadurch gekennzeichnet, dass** die Spannelemente mittels Nocken geöffnet werden.

13. Vorrichtung nach mindestens einem der Ansprüche 8 bis 12, **dadurch gekennzeichnet, dass** diese für unterschiedliche Durchmesser nicht umgerüstet werden muss.

14. Vorrichtung nach mindestens einem der Ansprüche 8 bis 13, **dadurch gekennzeichnet, dass** diese Halbzeuge in Form von Rohren oder Vollstäben trennt.

15. Vorrichtung nach mindestens einem der Ansprüche 8 bis 14, **dadurch gekennzeichnet, dass** die Halbzeuge einen Durchmesser von 5 bis 80mm aufweisen.
